# EUROPEAN PATENT SPECIFICATION

(11) **EP 1 040 779 B1**
(45) Date of publication and mention of the grant of the patent: **25.05.2005**
(21) Application number: 00105926.0
(22) Date of filing: 23.03.2000
(51) Int. Cl.: A47J 27/09

(54) **Automatic safety device for a pressure cooker**
Automatische Sicherheitsvorrichtung für einen Dampfdruckkochtopf
Dispositif de sécurité automatique pour cuiseur à pression

(30) Priority: 29.03.1999 IT MI990180
(43) Date of publication of application: 04.10.2000
(73) Proprietor: LAGOSTINA S.p.A., 28026 Omegna, Verbania (IT)
(72) Inventor: Moroni, Vitaliano, 28883 Gravellona Toce, Verbania (IT)
(74) Representative: Petruzzelli, Antonio

(56) References cited:
- EP-A- 0 736 282
- EP-A- 0 916 298
- GB-A- 2 048 426
- US-A- 4 620 643
- US-A- 4 932 550
- US-A- 5 370 257

## Description

This invention refers to an automatic safety device to be applied to the lid of a pressure cooker.

An automatic safety device applied to the lid of a pressure cooker to lock the lid in the closed position while the cooker is in use has been known for some time. This consists of a reciprocable pin that operates within a guiding bush inserted in a hole made in the lid of the cooker itself. The pin moves between a raised position, when the cooker is in use and the pressure of the steam in the cooker exerts a greater vertical force on the pin than the weight of the pin itself, thus preventing the lid from opening, and a lowered position, when the pressure inside the cooker returns to atmospheric pressure, in which it is possible to unlock and open the lid.

The pin consists mainly of a small cylinder the lower end of which has an external circular flange. When the pin is in its fully raised position this flange presses against the bottom of the base of the bush thus ensuring a perfect seal.

The traditional automatic safety device described above has one considerable disadvantage, consisting in the fact that if the lid of the cooker is closed incorrectly, due to inexperience or lack of attention on behalf of the user, the cooker can still reach its operating pressure although the safety device is not working.

To avoid this problem another traditional solution is to increase the diametrical clearance between the pin and the guiding bush; when the pin is unable to reach its fully raised position to lock the lid because the user has closed the lid incorrectly, the steam produced during cooking is constantly released via this clearance, preventing the cooker from reaching its operating pressure.

There is, however, a disadvantage with this second traditional design since, even when the lid is correctly applied to the cooker and the safety device is able to work, the steam continues to escape via the enlarged diametric clearance between the guiding bush and the pin itself, until the pressure inside the cooker is sufficient to raise the pin completely, thus allowing the lower flange to seal against the lower base of the bush. In this situation, if the heat applied to the cooker at the start of cooking is low, the internal pressure increases very slowly due to the fact that the instantaneous quantity of steam generated in the cooker is only slightly higher than that escaping from the clearance, and this may mean that the pin will take some time before reaching its highest point. This results in a considerable waste of energy.

Document EP-0 916 298 discloses the preamble of claim 1.

The purpose of this invention is therefore to find a remedy for the unfortunate faults in the traditional safety devices for pressure cookers and in particular to produce a safety device that ensures that the lid is securely locked when it is correctly in place on the cooker and that, at the same time, prevents the pressure increasing in a cooker where the lid has not been put on correctly.

Another purpose of this invention is to create a safety device that ensures that the cooker functions with no waste of energy.

Yet another purpose of this invention is to create a safety device that has a simple structure, that is easy to operate and is also inexpensive. All these purposes are achieved by a safety device which conforms to the claims illustrated below; a device which consists of a pin fitted with means that operate in conjunction with a bush to open/close a passage connecting the inside of the cooker with the atmosphere outside.

In the position assumed by the pin when the lid is wrongly closed, half way between the lowered and raised positions, these means cause the passage to open and thus allow the continuous escape of the over-pressure produced by the steam generated inside the cooker to the outside environment.

If, on the other hand, the lid is closed correctly, the pin remains in the highest point of its stroke, in which the relative position between these means and the bush corresponds to the closing of the passage, and makes a perfect seal with the bush. In this way the external heating source can increase the pressure inside the cooker until it reaches operating pressure.

What has been stated can be better understood with the help of the following descriptions of some preferred versions of this invention, which refer to the appended drawings in which:
Figs. 1, 2 and 3 show an enlarged side view of a partial section of a first preferred embodiment of the pin in this invention, in its lowered, middle position, when the lid has not been correctly closed, and in its raised position, corresponding to a correctly closed lid.
Fig. 4 shows the slightly enlarged side view section of a second preferred embodiment of the pin in this invention.
Fig. 5 shows the slightly enlarged side view section of a third preferred embodiment of the pin in this invention.
Fig. 6 shows a view of a pressure cooker fitted with a lever-closing lid that uses the safety device of this invention, wherein the lid has been incorrectly closed.
Fig. 7 shows a view of the lid of a pressure cooker with a bayonet closing lid using the safety device of this invention.
Figs. 8a-b, show a plan view and a side elevation of another lid of a pressure cooker which uses the safety device of this invention.

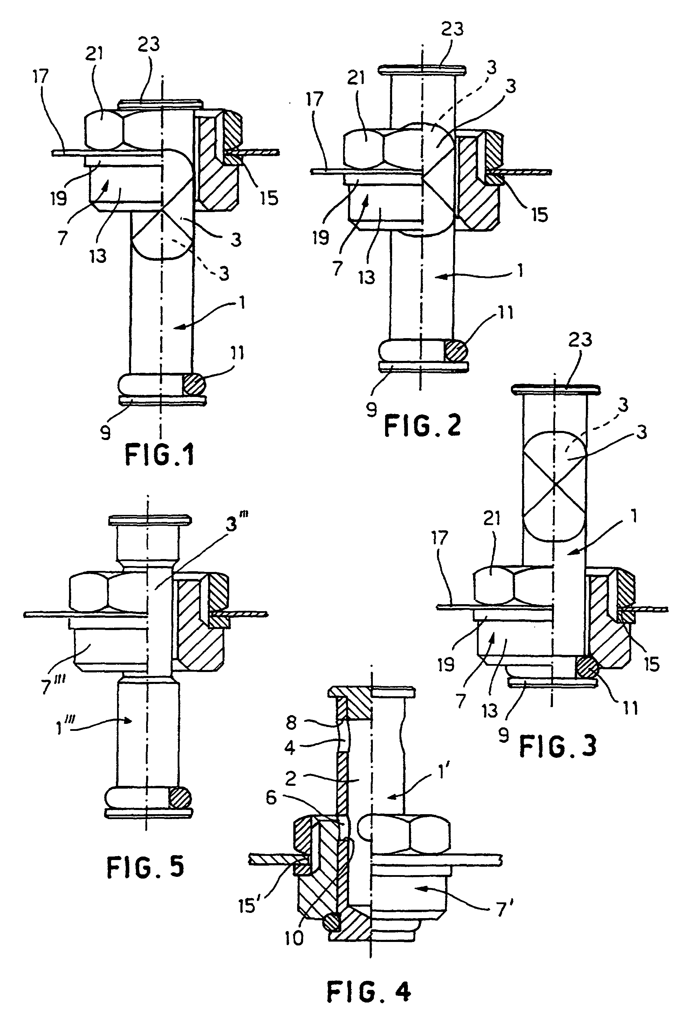

In Figs. 1-3 the pin 1 of the first preferred embodiment of the invention has a circular cross section and has, corresponding to a portion of its side wall, two, diametrically opposite, identical axial grooves 3 created by milling. The transversal sections of pin 1 therefore become smaller, corresponding to the grooves 3.

A circular flange 9 extends from the edge of the lower base of the pin 1 on which an annular sealing gasket 11, that adheres to the perimeter of the pin 1 itself, rests.

Pin 1 is applied to the lid of the cooker and can move between its lowered position , when there is no relative pressure inside the cooker, and its raised position, reached due to the relative pressure generated by the steam produced inside the cooker.

In more detail, pin 1 can move within the guiding bush 7 sealed inside A hole 15 in the lid.

Bush 7 has an enlarged head 13 and a thread on the external side wall. It is inserted the into hole 15 inside the lid 17 up to the point at which the head 13 touches the lower surface of lid 17, with a washer 19 in between, while a nut 21 is screwed onto its threaded part that protrudes from hole 15 on the top of the lid 17, ensuring that it is secured to the lid 17.

The axis of bush 7 is only slightly smaller than the axial extension of groove 3.

Therefore, there is a minimum diametric clearance between bush 7 and pin 1 , in this case 0.2 mm, sized so as to allow the guided sliding of pin 1, at the same time keeping the amount of steam that leaks from it at an almost negligible level, thereby limiting energy consumption.

To prevent pin 1 from completely falling through the lower side of its housing, the upper edge of pin 1 itself is extended by a circular flanging 23 which has a larger diameter than the inner diameter of bush 7.

Fig. 4 shows an alternative structure of pin 1' conforming to the present invention. In this version an axial cavity 2 has been made inside pin 1', reaching the side wall of pin 1' through a circumferential series of four, upper 4 and lower 6, angularly equidistant, apertures. The axial difference between the upper 4 and lower 6 apertures, defined as the distance between the upper end 8 of the upper circular apertures 4 and the lower end 10 of the lower circular apertures 6 is greater than the axial size of the bush 7'.

In figs. 1-3 when bush 7 overlaps grooves 3 of pin 1, due to the effect of the axial sliding of pin 1, a passage opens between the narrow section of pin 1 and bush 7, connecting the inside of the cooker to the outside. When, on the other hand, the grooves 3 of pin 1 are at least partially unaligned with respect to bush 7, this passage is closed by the full sections of the pin.

Similarly, when, due to the effect of the sliding of pin 1' of fig.4, bush 7' coincides with the portion of the pin 1' between the lower apertures 6 and the upper apertures 4, these apertures remain, simultaneously, at least partially free, and a direct passage can then be opened through the inner cavity 2, between the inside of the cooker and the outside environment. Instead, when bush 7' is even only partially unaligned with respect to the axial portion of pin 1' between the lower apertures 6 and the upper apertures 4, one of these apertures will be completely blocked by bush 7' and the above-mentioned passage will be closed.

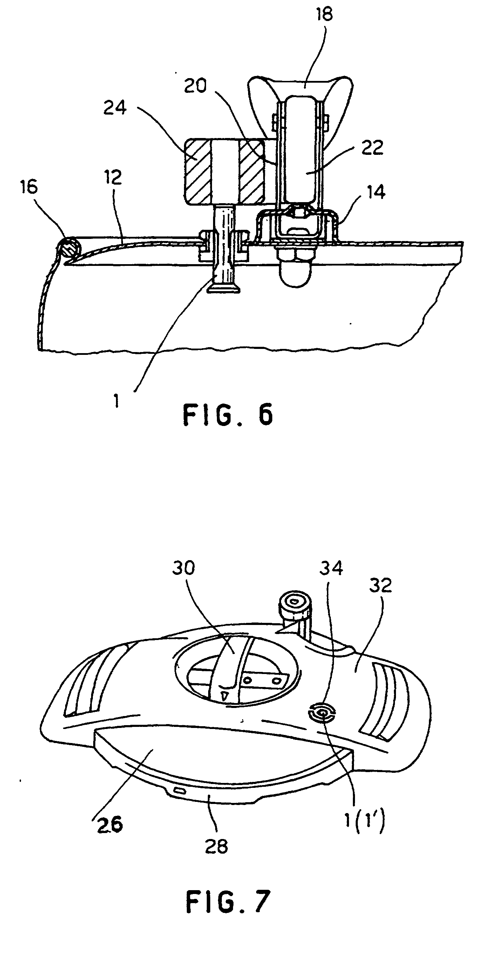

Fig. 6 shows the use of the safety device illustrated in figs. 1-3, on a pressure cooker with a lever-fastening lid. The lid 12 consists of a crossbar 14, bolted to the centre of lid 12, the longitudinal extremities of which rest on the upper edge 16 of the opening of the cooker; of a lever 18, hinged onto a bracket 20 at the centre of lid 12, with a cam shaped end 22 to operate the crossbar 14 when it closes the lid 12; and finally of an engangin section 24 for the pin 1 integral with the lever 18, designed to hold the pin 1 when the lever 18 is in the closed position and when the pressure increases within the cooker so as to keep the lid 12 locked.

A description is given below of how the safety device of this invention functions when it is fitted to this type of pressure cooker.

Due to the effect of its own weight, before heat is applied to the cooker, pin 1 is in its lowered position where its upper flange 23 rests on the upper base of bush 7.

If, at this point, the cooker lid 12 is correctly closed, the engagement seat 24 of pin 1 and pin 1 itself are in a co-axial position and, when the pressure within the cooker pushes pin 1 up towards the raised position, the reciprocal coupling can take place that causes the lid 12 to be locked. Once this raised position has been reached the seal 11 on the lower flange 9 of pin 1 presses on the enlarged head 13 of the bush 7, creating a perfect seal.

If, on the other hand, the lever 18 is only rotated partially and does not reach the correct closing position, the engagement seat 24 of pin 1 and pin 1 itself will no longer be in a co-axial position and reciprocal engagement cannot take place. In this situation, pin 1 is unable to reach its raised position and remains in an intermediate position, which, during the design phase, was made to coincide with the position at which the bush 7 completely overlaps the grooves 3 of pin 1 and the passage between the inside of the cooker and the outer environment remains open. In this way, the passage aperture guarantees that the steam produced inside the cooker can escape, preventing the pressure within from increasing to a dangerous level.

Pin 1 or 1' of this invention can however be fitted to any lid that requires a safety device for locking the lid on a pressure cooker.

To illustrate this point fig. 7 shows a bayonet fastening lid 26, that is to say, a lid with an edge 28 suitably shaped to engage with appropriate tongues on the mouth of the cooker. The lid 26 closes over the cooker by operating a central knob 30 which, in turn, is connected to a fairing 32 which turns in a coaxial direction, but in an opposite angular direction to the knob 30 itself.

A circular aperture 34 has been made on the fairing, where the radial distance between the hole 15 or 15' within which the pin 1 or 1' of this invention moves and the centre of the lid 26 is the same.

When complete rotation of knob 30 brings the aperture 34 of the fairing 34 in line with the hole below 15 or 15', the lid 26 is closed correctly and the pressure created inside the cooker forces the pin 1 or 1' inside the aperture 34, preventing the knob 3 from being deliberately or accidentally turned, resulting, consequently, in opening the cooking.

If knob 30 is not completely turned, the aperture 34 of the fairing 32 and the hole 15 or 15' of lid 28 are not line; the pin 1 or 1' cannot fit into the hole 15 or 15' but touches the inner surface of the fairing 32 and remains at this height of its stroke, still making it possible to open the cooker. This position, occupied by pin 1 or 1' is, however, the position that coincides with the opening of the passage between the inside of the cooker and the outside environment so that, in any case, an undesirable increase in pressure inside the cooker is prevented.

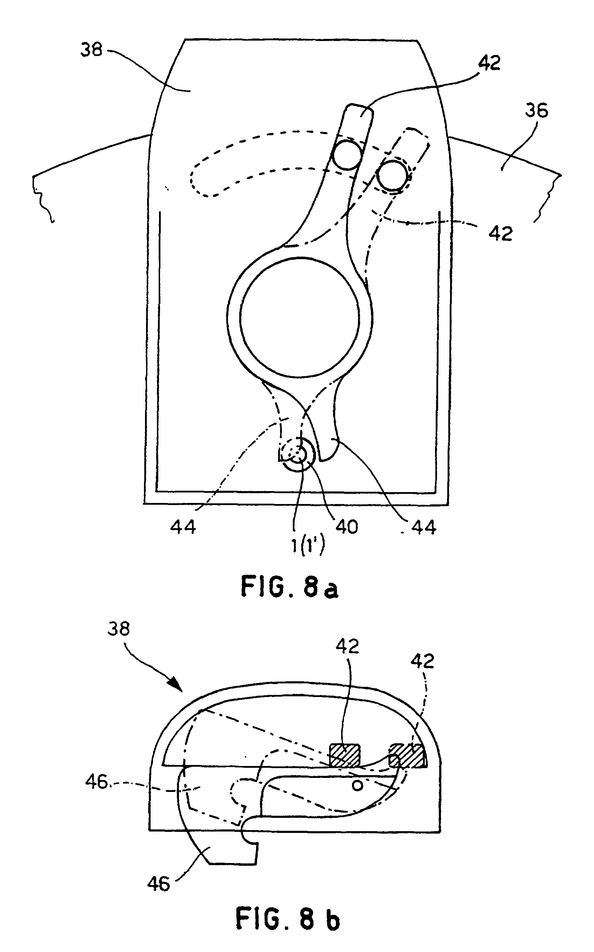

In Figs. 8a-b, the invention is fitted onto a lid 36 where one of the two handles 38 has an aperture 40 in line with the hole 15 or 15' made in the lid below for the pin 1 or 1'. A manually-controlled lever 42 simultaneously moves a finger 44 that goes in and out of the aperture 40 on the handle 38, and a removable hook 46 that can be fitted into a housing (not shown) of the underlying handle of the cooker. When the finger 44 enters the aperture 40 on the handle 38 the hook 46 simultaneously releases the handle, and vice versa, when the finger 44 goes out of the aperture 40 the hook 46 holds back the handle.

If the lid has been closed correctly continuous line the pin 1 or 1' can come out of the aperture 40 on the handle 38 and prevent the lever 42 from turning. The latter then remains in its position, hooked to the cooker handle, and therefore locks the lid.

If the lid 36 has not been closed correctly dotted line, the hook 46 cannot fit into its position and the lever 42 remains locked in the position unhooked from the cooker handle while the finger 44 remains inside the aperture 40 of the lid 36 handle 38, preventing the pin 1 or 1' from reaching the raised position. The middle position reached by the pin 1 or 1' against the finger 44 is the position that corresponds with the passage aperture that allows the steam generated inside the cooker to escape immediately.

The description of the preferred embodiment, of course, is intended just as an exemplification of the invention and is certainly not limiting the claimed principle.

It is, in fact, obvious that the number, shape and size of the pin grooves in figures 1-3 can be different from those illustrated, as can the number, shape and sizes of the apertures of the pin in figure 4.

Moreover, the above-mentioned means that work in conjunction with the bush to open and dose the passage between the inside of the cooker and the outer environment may be replaced by equivalent devices. The passage between the inside of the cooker and the outside environment may be guaranteed, for example, by using the pin 1''' in figure 5, a side portion of which has been turned around its circumference in order to create an axial section 3''' on pin 1''' with a narrow diameter.

Naturally, the axial extension of the section 3''' of this last version of the invention must also be greater than the bush 7''', so that pin 1''' can reach the position shown in fig. 5, in which the passage between the inside of the cooker and the outer environment is opened, if the lid should not be properly closed.

## Claims

1. An automatic safety device for the lid of a pressure cooker comprising: a hole (15, 15') through the lid of the cooker, a pin (1, 1', 1") movable through the hole (15, 15') of the lid from a low position to a high position at which the pin (1, 1', 1") locks the cooker lid, a bush (7, 7', 7"), inserted in the hole (15, 15'), for guiding the stroke of the pin (1, 1', 1"), the pin (1,1',1''') is fitted with means (3; 2, 3 and 6, 3''') that, operating in conjunction with the bush (7, 7', 7"), open and close a direct passage between the inside of the cooker and the exterior, **characterized in that** there is a minimum diametric clearance between the guiding bush (7, 7', 7") and the pin (1, 1', 1"), sized so as to allow the guided sliding of said pin, and the axial size of said guiding bush is smaller than the axial extension of said means so as to let the passage opened when, due to the sliding of the pin, the bush (7, 7', 7") coincides with the portion of the pin (1, 1', 1") corresponding to the opening of said passage, half way between the raised and the lowered position of the stroke of the pin, while letting said passage be closed by the full section of said pin, when said means are at least partially unaligned with respect to said bush.

2. An automatic safety device according to claim 1. **characterized in that** said means are in the form of at least one groove (3) on the pin (1) that extends along an axial section of the pin (1) that is greater than the axial size of the bush (7) so that the passage is open when the bush (7) overlaps the groove (3) and is shut when the bush (7) is at least partially unaligned with respect to the groove (3).

3. An automatic safety device according to the previous claim, **characterised in that** these means are in the form of two diametrically opposite identical grooves (3) formed by milling the side wall of the pin (1).

4. An automatic safety device according to claim 1, **characterised in that** these means are in the form of a cavity (2) on the pin (1') that results in at least one upper (4) and at least one lower (6) aperture on the side surface of the pin (1), the distance between the upper (4) and lower (6) aperture being greater than the axial size of the bush (7') so that the passage will be open when the bush (7') is positioned on the axial section of the pin (1') between the upper (4) and lower (6) opening and will be dosed when the bush (7') is at least partially unaligned with respect to said axial section of the pin (1').

5. An automatic safety device according to the claim 4, **characterised in that** this cavity (2) results in a series of upper, angularly equidistant, circular apertures and a series of lower, angularly equidistant, circular apertures along the circumference of the side wall of the pin.

6. An automatic safety device, according to claim 1, **characterised in that** said means are in the form of a section (3''') of pin (1''') with a narrower diameter the axial extension of said section (3''') being greater than the axial size of the bush (7''') so that the passage will be open when the bush (7''') is overlapping said section (3"') and will be closed when the bush (7"') is at least partially unaligned with respect to the said section (3'").

7. An automatic safety device in compliance with any of the claims from 1 to 6 **characterised in that** said means of the pin (1, 1', 1''') is in register with said bush (7, 7', 7'') at an intermediate position of the stroke of the pin (1, 1', 1") corresponding to an incorrect closure of the cooker lid.

## Patentansprüche

1. Eine automatische Sicherheitsvorrichtung für den Deckel eines Dampfdrucktopfs, die folgendes umfasst: eine Öffnung (15, 15') durch den Deckel des Dampfdrucktopfs, einen Stift (1, 1', 1"), der durch die Öffnung (15, 15') des Deckels von einer niedrigen Stellung zu einer hohen Stellung bewegt werden kann, in der der Stift (1, 1', 1") den Deckel des Dampfdrucktopfs verschließt, eine Hülse (7, 7', 7"), die in die Öffnung (15, 15') eingesetzt ist, um den Hub des Stifts (1, 1', 1") zu führen, wobei der Stift mit Elementen (3; 2,3 und 6,3"') eingepasst ist, die, in Verbindung mit der Hülse (7, 7'. 7") arbeitend, jeweils einen direkten Durchgang zwischen dem Inneren und Äußeren des Dampfdrucktopfs öffnen und schließen, **dadurch gekennzeichnet, dass** ein minimaler diametraler Spielraum zwischen der Führungshülse (7, 7', 7") und dem Stift (1, 1'. 1") besteht, der so bemessen ist, dass ein geführtes Gleiten des genannten Stifts ermöglicht wird, sowie dadurch, dass die axiale Größe der genannten Führungshülse kleiner ist als die axiale Ausdehnung der genannten Elemente, so dass der Durchgang offen gelassen wird, wenn die Hülse (7, 7', 7") durch das Gleiten des Stifts mit dem Abschnitt des Stifts (1, 1', 1") übereinstimmt, der der Öffnung des genannten Durchgangs entspricht, und zwar auf halbem Weg zwischen der hoch- und der heruntergefahrenen Stellung des Stifthubs, während der genannte Durchgang durch den vollen Querschnitt des genannten Stifts geschlossen gelassen wird, wenn die genannten Elemente mindestens teilweise in Beziehung auf die genannte Hülse unausgerichtet sind.

2. Eine automatische Sicherheitsvorrichtung gemäß Anspruch 1, **dadurch gekennzeichnet, dass** die genannten Elemente die Form von mindestens einer Rille (3) auf dem Stift (1) aufweisen, die sich entlang eines axialen Abschnitts des Stifts (1) erstreckt, der größer als die axiale Größe der Hülse (7) ist, so dass der Durchgang offen ist, wenn die Hülse (7) die Rille (3) überdeckt, und geschlossen, wenn die Hülse (7) mindestens teilweise in Beziehung auf die Rille (3) unausgerichtet ist.

3. Eine automatische Sicherheitsvorrichtung gemäß dem vorausgegangenen Anspruch, **dadurch gekennzeichnet, dass** diese Elemente die Form von zwei diametral gegenüberliegenden, identischen Rillen (3) aufweisen, die durch Fräsen der Seitenwände des Stifts (1) gebildet werden.

4. Eine automatische Sicherheitsvorrichtung gemäß Anspruch 1, **dadurch gekennzeichnet, dass** diese Elemente die Form eines Hohlraums (2) am Stift (1') aufweisen, der mindestens eine obere (4) und mindestens eine untere (6) Öffnung an der Seitenfläche des Stifts (1) zur Folge hat, wobei der Abstand zwischen der oberen Öffnung (4) und der unteren Öffnung (6) größer ist als die axiale Größe der Hülse (7), so dass der Durchgang offen ist, wenn die Hülse sich am axialen Abschnitt des Stifts (1') zwischen der oberen (4) und unteren Öffnung (6) befindet, und geschlossen ist, wenn die Hülse (7') mindestens teilweise in Bezug auf den genannten axialen Abschnitt des Stifts (1') unausgerichtet ist.

5. Eine automatische Sicherheitsvorrichtung gemäß Anspruch 4, **dadurch gekennzeichnet, dass** dieser Hohlraum (2) eine Reihe von oberen, winklig abstandsgleichen, kreisförmigen Öffnungen entlang des Umfangs der Seitenwand des Stifts zur Folge hat.

6. Eine automatische Sicherheitsvorrichtung gemäß Anspruch 1, **dadurch gekennzeichnet, dass** die genannten Elemente die Form eines Abschnitts (3"') des Stifts (1'") mit schmälerem Durchmesser aufweisen, wobei die axiale Ausdehnung des genannten Abschnitts (3"') größer ist als die axiale Größe der Hülse (7"'), so dass der Durchgang offen ist, wenn die Hülse (7"') den genannten Abschnitt (3"') überdeckt, und geschlossen, wenn die Hülse (7"') mindestens teilweise in Bezug auf den genannten Abschnitt (3"') unausgerichtet ist.

7. Eine automatische Sicherheitsvorrichtung gemäß einem beliebigen der Ansprüche von 1 bis 6, **dadurch gekennzeichnet, dass** die genannten Elemente des Stifts (1, 1', 1"') mit der genannten Hülse (7, 7', 7) an einer Zwischenstellung des Hubs des Stifts (1, 3', 1") übereinstimmen, der einer nicht korrekten Schließung des Deckels des Dampfdruckkochers entspricht.

## Revendications

1. Un dispositif automatique de sécurité pour le couvercle d'un cuiseur à pression comprenant: un trou (15, 15') à travers le couvercle du cuiseur, une broche (1, 1', 1") mobile passant à travers le trou (15, 15') du couvercle d'une position basse à une position haute où la broche (1, 1', 1") verrouille le couvercle du cuiseur, une douille (7, 7', 7"), insérée dans le trou (15, 15') pour guider la course de la broche (1, 1', 1"), la broche (1, 1', 1") est entrée avec un moyen (3 ; 2,3 et 6,3") qui, fonctionnant en conjonction avec la douille (7, 7', 7"), ouvre et ferme un passage direct entre l'intérieur du cuiseur et l'extérieur, **caractérisé par le fait qu'**il y a un espace libre diamétral minimum entre la douille pilote (7, 7', 7") et la broche (1, 1', 1") dimensionné de manière à permettre le coulissement guidé de la dite broche et la dimension axiale de la dite douille de guidage est plus petite que l'extension axiale du dit moyen afin de laisser un passage ouvert lorsque, à cause du glissement de la broche, la douille (7, 7', 7") coïncide avec la portion de la broche (1, 1', 1") correspondant à la dite ouverture de passage, à mi-chemin entre les positions levée et baissée de la course de la broche, tout en permettant que le dit passage soit fermé par la section entière de la dite broche, lorsque le dit moyen est au moins partiellement mal aligné par rapport à la dite douille.

2. Un dispositif automatique de sécurité selon la revendication 1, **caractérisé par le fait que** le dit moyen est sous forme d'au moins une rainure (3) dans la broche (1) qui s'étend le long d'une section axiale de la broche (1) qui est supérieure à la dimension axiale de la douille (7), de sorte que le passage soit ouvert quand la douille (7) recouvre la rainure (3) et soit fermé lorsque la douille (7) est au moins partiellement mal alignée par rapport à la rainure (3).

3. Un dispositif automatique de sécurité selon la revendication précédente, **caractérisé par le fait que** ce moyen est sous forme de deux rainures identiques diamétralement opposées (3) formées en moletant la paroi latérale de la broche (1).

4. Un dispositif automatique de sécurité selon la revendication 1, **caractérisé par le fait que** le dit moyen sous forme d'une cavité (2) dans la broche (1') qui résulte en au moins une ouverture supérieure (4) et au moins une ouverture inférieure (6) dans la surface latérale de la broche (1), la distance entre l'ouverture supérieure (4) et l'ouverture inférieure (6) étant supérieure à la dimension axiale de la douille (7') de sorte que le passage sera ouvert lorsque la douille (7') est positionnée dans la section axiale de la broche (1') entre l'ouverture supérieure (4) et l'ouverture inférieure (6) et sera fermée lorsque la douille (7') est au moins partiellement mal alignée par rapport à la dite section axiale de la broche (1').

5. Un dispositif automatique de sécurité selon la revendication 4 **caractérisé par le fait que** la cavité (2) est composée d'une série d'ouvertures circulaires supérieures, en angle équidistant, et d'une série d'ouvertures circulaires inférieures, en angle équidistant, le long de la circonférence de la paroi latérale de la broche.

6. Un dispositif automatique de sécurité, selon la revendication 1 **caractérisé par le fait que** le dit dispositif sous forme de section (3") de broche (1") avec un diamètre plus étroit que l'extension axiale de la dite section (3") étant supérieure à la dimension axiale de la douille (7") de sorte que le passage soit ouvert lorsque la douille (7") recouvre partiellement la dite section (3") et soit fermée lorsque la douille (7") est au moins partiellement mal alignée par rapport à la dite section (3").

7. Un dispositif automatique de sécurité conforme à toutes les revendications de 1 à 6, **caractérisé par le fait que** le dit moyen de la broche (1, 1', 1") coïncide exactement avec la dite douille (7, 7', 7") à une position intermédiaire de la course de la broche (1, 1', 1") correspondant à une fermeture incorrecte du couvercle du cuiseur.
